# EUROPÄISCHE PATENTSCHRIFT

(11) **EP 3 313 584 B1**
(45) Veröffentlichungstag und Bekanntmachung des Hinweises auf die Patenterteilung: **25.09.2019**
(21) Anmeldenummer: 16721408.9
(22) Anmeldetag: 03.05.2016
(51) Int. Cl.: B05B 12/14, B05B 7/14, F16K 3/02

(54) **PULVERWEICHE UND PULVERABGABESYSTEM MIT SOLCH EINER PULVERWEICHE**
POWDER SWITCH AND POWDER DELIVERY SYSTEM COMPRISING SUCH A POWDER SWITCH
BLOC CHANGEUR DE POUDRE ET SYSTÈME DE DISTRIBUTION DE POUDRE POURVU DUDIT BLOC CHANGEUR DE POUDRE

(30) Priorität: 26.06.2015 DE 102015110312
(43) Veröffentlichungstag der Anmeldung: 02.05.2018
(73) Patentinhaber: Gema Switzerland GmbH, 9015 St. Gallen (CH)
(72) Erfinder: MICHAEL, Hanspeter, 9200 Gossau (CH); SANWALD, Marco, 9030 Abtwil (CH)
(74) Vertreter: Trinks, Ole
(86) Internationale Anmeldenummer: PCT/EP2016/059908
(87) Internationale Veröffentlichungsnummer: WO 2016/206846

(56) Entgegenhaltungen:
- EP-A1- 2 361 691
- WO-A1-2004/050259
- DE-A1- 2 237 507
- DE-A1- 2 548 463
- IT-A1- TO 920 396
- JP-A- H04 358 554

## Beschreibung

Die vorliegende Erfindung betrifft eine Pulverweiche, insbesondere zum wahlweisen Zuführen von unterschiedlichen Pulversorten und/oder -arten zu einer Pulverabgabeeinrichtung, wie beispielsweise eine Pulversprühpistole. Die Erfindung betrifft ferner ein Pulverabgabesystem mit einer Pulverabgabeeinrichtung und einer Pulverweiche.

Aus der Pulverbeschichtungstechnik ist es bekannt und üblich, zur Sprühbeschichtung von Gegenständen mit Beschichtungspulver Pulverabgabeeinrichtungen beispielsweise in Gestalt von manuellen oder automatischen Pulversprühpistolen einzusetzen, wobei die Pulverabgabeeinrichtungen üblicherweise an ihrem vorderen Endbereich einen Beschichtungspulver-Sprühkopf zum Versprühen von Beschichtungspulver und an ihrem gegenüberliegenden hinteren Endbereich einen Beschichtungspulver-Anschluss aufweisen. Über den Beschichtungspulver-Anschluss der Pulverabgabeeinrichtung ist Pulver, insbesondere Beschichtungspulver, einem sich zu dem Beschichtungspulver-Sprühkopf streckenden Beschichtungspulverkanal zuführbar.

Bei den hierin behandelten Pulverabgabeeinrichtungen handelt es sich insbesondere um Pulverabgabeeinrichtungen für pneumatisch in einem Druckluftstrom gefördertes Beschichtungspulver. Das Beschichtungspulver wird am vorderen Endbereich der Pulverabgabeeinrichtung durch einen Materialauslass des Beschichtungspulver-Sprühkopfes versprüht. Der Materialauslass kann z.B. durch eine Materialkanalmündung mit oder ohne einem Querablenkelement (Prallkopf oder dergleichen), durch eine Düse oder durch ein Rotationszerstäuberelement gebildet sein.

Das Beschichtungsmaterial, insbesondere Beschichtungspulver oder aber auch Naßlack, wird vorzugsweise durch Reibungselektrizität und/oder durch Hochspannung von mehr als 1.000 Volt, beispielsweise mit einer Spannung im Bereich zwischen 10.000 Volt und 140.000 Volt, elektrostatisch aufgeladen, um dadurch eine bessere Haftung an dem zu beschichtenden, vorzugsweise geerdeten Objekt zu erzielen, und um Streuverluste zu reduzieren.

Eine derartige Pulverabgabeeinrichtung ist zumindest dem Prinzip nach beispielsweise in der Druckschrift DE 44 18 288 A1 beschrieben. Es handelt sich hierbei um eine automatische Pulversprühvorrichtung zur elektrostatischen Sprühbeschichtung von Gegenständen mit Beschichtungsmaterial, insbesondere Beschichtungspulver.

Die aus diesem Stand der Technik bekannte Pulversprühvorrichtung weist ein längliches Gehäuse in Form eines Pistolenlaufes, einen sich in Gehäuselängsrichtung durch das Gehäuse erstreckenden Beschichtungsmaterialkanal, eine Düse zum Zerstäuben des Beschichtungsmaterials am stromabwärts liegenden vorderen Ende des Beschichtungsmaterialkanals, und einen im Gehäuse untergebrachten Hochspannungserzeuger auf. Der Hochspannungserzeuger dient dabei zum Erzeugen einer Hochspannung an einer Hochspannungselektrode, mit Hilfe welcher das mit der Pulversprühvorrichtung zu versprühende Beschichtungsmaterial elektrostatisch aufgeladen wird.

Bei der aus diesem Stand der Technik bekannten Pulversprühvorrichtung sind alle Anschlussleitungen, insbesondere die Anschlussleitung für das zu versprühende Beschichtungsmaterial, die Anschlussleitung für eine elektrische Spannung auf der Primärseite des Hochspannungserzeugers, und die Anschlussleitung für Druckluft, durch einen Roboterarm hindurch geführt und an der hinteren Stirnseite der Pulversprühvorrichtung, an welcher die Pulversprühvorrichtung beispielsweise an einem Roboterarm befestigt werden kann, angeschlossen. Die über die Anschlussleitung für Druckluft der Pulversprühvorrichtung zugeführte Druckluft dient zur Umströmung der Hochspannungselektrode, damit sich an ihr kein Beschichtungsmaterial ansammeln kann. Ferner kann während eines Reinigungsvorganges Druckluft zur Unterstützung des Zerstäubungsvorgangs oder zum Ausblasen von Pulverresten in die Pulversprühvorrichtung verwendet werden.

Gemäß der DE 44 18 288 A1 sind mehrere Pulversprühvorrichtungen jeweils mit ihrer hinteren Stirnseite an einem Träger befestigt, welcher auf seiner von den Pulversprühvorrichtungen abgewandten Seite an einem Roboterarm befestigt ist. Der Hochspannungserzeuger ist über einem Pulverkanal angeordnet, welcher sich in Längsrichtung des Gehäuses durch das Gehäuse erstreckt. Zur Unterbringung dieses Hochspannungserzeugers hat das Gehäuse einen nach oben erweiterten Bereich.

Auch aus der Druckschrift US 4,196,465 ist eine Pulverabgabeeinrichtung in Gestalt einer Pulversprühpistole bekannt, durch deren Pistolenlauf sich ein Pulverkanal für Beschichtungspulver erstreckt, wobei unterhalb des Pulverkanals die Komponenten eines Hochspannungserzeugers angeordnet sind. Ein Handgriff ist lösbar am Pistolenlauf befestigt, so dass der Pistolenlauf auch ohne Handgriff verwendet werden kann, beispielsweise auf einem ortsfesten Ständer oder an einem Hubständer oder an einem Roboterarm. Bei der Befestigung des Pistolenlaufes an einem Ständer oder Roboterarm sind an diesem Ständer oder Roboterarm befestigte Arme erforderlich, welche durch eine Öffnung in einer Wand einer Beschichtungskabine hindurchreichen müssen, in welcher der Pistolenlauf zum Beschichten von Gegenständen angeordnet werden muss. Die Anschlussleitungen für das Beschichtungsmaterial, für die elektrische Spannung und für die Druckluft erstrecken sich vom Pistolenlauf getrennt voneinander ebenfalls durch die Wandöffnung der Kabine hindurch und müssen bei Verwendung eines Hubständers eine Schlaufe haben, damit ihre mit dem Pistolenlauf verbundenen Abschnitte sich relativ zu dem stromaufwärtigen, außerhalb der Kabine ortsfest angeordneten Leitungsabschnitte bewegen können.

Die zuvor beschriebenen, aus dem Stand der Technik bekannten Pulverabgabeeinrichtungen sind im Betrieb jeweils über eine entsprechende Verlängerung an einem außerhalb einer Beschichtungskabine positionierten Ständer bzw. Roboter befestigt, wobei die Verlängerung durch eine Öffnung in einer Wand der Beschichtungskabine hindurchreicht.

Nachteilig in diesem Zusammenhang ist, dass eine Reinigung solcher Pulverabgabeeinrichtungen, beispielsweise aufgrund eines Pulverwechsels, relativ zeitaufwändig und umständlich ist. Dies liegt insbesondere auch daran, dass nicht nur die Pulverabgabeeinrichtungen selber von Pulverresten sorgfältig zu reinigen sind, sondern auch die durch die Verlängerungen geführten Beschichtungsmaterial-Leitungen, und insbesondere auch die Pulverleitungen, die dazu dienen, von einem Pulverreservoir das zu versprühende Beschichtungsmaterial den durch die Verlängerungen geführten Beschichtungsmaterial-Leitungen bzw. den Pulverabgabeeinrichtungen zuzuführen.

Das Reinigen der durch die Verlängerungen geführten Beschichtungsmaterial-Leitungen und der Pulverleitungen ist häufig relativ zeitaufwendig, da die Beschichtungsmaterial-Leitungen häufig nur schlecht zugänglich sind. Dies macht es in der Regel erforderlich, dass zum Zwecke der Reinigung der Beschichtungsmaterial-Leitungen die Pulverabgabeeinrichtungen wieder komplett aus der Wandöffnung der Beschichtungskabine zurückgezogen werden müssen.

Im Hinblick auf das Reinigen der Pulverleitungen, mit denen das von den Pulverabgabeeinrichtungen zu versprühende Beschichtungsmaterial von einem Pulverreservoir zugeführt wird, ist anzumerken, dass diese Pulverleitungen in der Regel relativ lang sind, was ebenfalls zu einer relativ zeitaufwändigen Reinigung im Falle beispielsweise eines Farbwechsels führt.

Der Erfindung liegt somit die Aufgabe zugrunde, eine Lösung anzugeben, mit welcher bei Pulverabgabeeinrichtungen, die insbesondere von einem außerhalb einer Beschichtungskabine angeordneten, ortsfesten Ständer oder von einem außerhalb einer Beschichtungskabine angeordneten Hubständer oder von einer andere Positioniereinrichtung getragen werden, ein Umschalten zwischen einer ersten Pulversorte oder Pulverart zu einer zweiten Pulversorte oder Pulverart effizienter erfolgen kann, und zwar insbesondere hinsichtlich der Zeit und des Aufwandes. Insbesondere soll zum Umschalten zwischen unterschiedlichen Pulversorten bzw. Pulverarten es nicht mehr notwendig sein, Pulverzuführleitungen durch Wandöffnungen in der Beschichtungskabine zu führen.

Diese Aufgabe wird erfindungsgemäß durch eine Pulverweiche gemäß dem unabhängigen Patentanspruch 1 und durch ein Pulverabgabesystem gemäß dem nebengeordneten Patentanspruch 15 gelöst.

Demgemäß wird eine Pulverweiche vorgeschlagen, welche einen ersten Pulvereinlass und mindestens einen weiteren, zweiten Pulvereinlass sowie einen Pulverauslass aufweist, wobei wahlweise entweder der erste Pulvereinlass oder der mindestens eine zweite Pulvereinlass strömungsmäßig mit dem Pulverauslass der Pulverweiche verbindbar ist. Auf diese Weise können mit Hilfe der Pulverweiche wahlweise unterschiedliche Pulversorten und/oder Pulverarten einer strömungsmäßig mit dem Pulverauslass der Pulverweiche verbundenen Pulverabgabeeinrichtung, insbesondere automatischen Pulversprühvorrichtung, zugeführt werden. Ein Umschalten zwischen unterschiedlichen Pulversorten bzw. Pulverarten macht es somit nicht mehr erforderlich, die Pulverzufuhrleitungen zu der Pulverabgabeeinrichtung (insbesondere automatische Pulversprühvorrichtung) zu reinigen, da vorzugsweise für jede zu versprühende Pulversorte bzw. Pulverart eine Pulverzufuhrleitung zur Verfügung steht, die bedarfsweise strömungsmäßig mit dem Pulverauslass der Pulverweiche verbunden werden kann, um somit eine Zufuhr von diesem Beschichtungspulver zu der ebenfalls strömungsmäßig mit dem Pulverauslass der Pulverweiche verbundenen Pulverabgabeeinrichtung zu ermöglichen. Insbesondere ist mit der erfindungsgemäßen Lösung ein automatischer Pulverschlauchwechsel von verschiedenen Pulverquellen an Pulverabgabeeinrichtungen möglich.

Die erfindungsgemäße Pulverweiche dient insbesondere zum wahlweisen Zuführen von unterschiedlichen Pulversorten und/oder -arten zu einer Pulverabgabeeinrichtung, die als automatische Pulversprühvorrichtung ausgeführt ist und eine Sprühdüse oder einen Rotationszerstäuber aufweisen kann.

Nachfolgend wird die Erfindung anhand eines in den beiliegenden Zeichnungen gezeigten Ausführungsbeispiels näher beschrieben.

Es zeigen:
- FIG. 1: eine isometrische Ansicht einer exemplarischen Ausführungsform des erfindungsgemäßen Pulverabgabesystems, welches eine Pulverweiche sowie eine mit dem Pulverauslass der Pulverweiche strömungsmäßig verbundene Pulverabgabeeinrichtung aufweist;

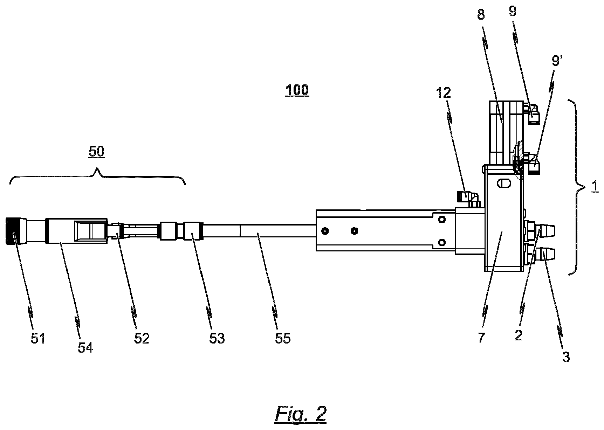

- FIG. 2: eine Seitenansicht auf das Pulverabgabesystem gemäß FIG. 1;

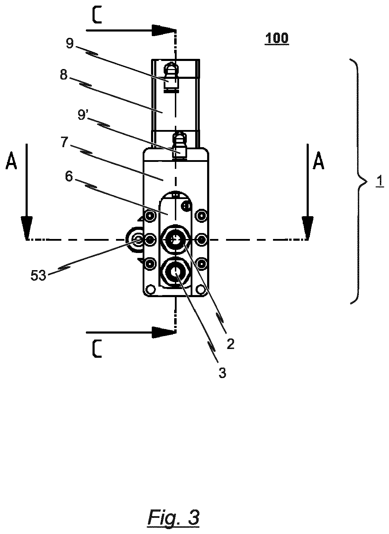

- FIG. 3: eine Rückansicht auf das Pulverabgabesystem gemäß FIG. 1;
- FIG. 4: eine Schnittansicht entlang der Linie A-A in FIG. 3;
- FIG. 5: eine Schnittansicht entlang der Linie C-C in FIG. 3; und
- FIG. 6: eine Schnittansicht der bei dem in FIG. 1 gezeigten Pulverabgabesystem zum Einsatz kommenden Pulverweiche in einem Sperrmodus.

Nachfolgend wird unter Bezugnahme auf die beiliegenden Zeichnungen eine exemplarische Ausführungsform eines Pulverabgabesystems 100 beschrieben, bei welchem eine Pulverabgabeeinrichtung 50 zusammen mit einer Pulverweiche 1 zum Einsatz kommt. Mit der Pulverweiche 1 sind - im Rahmen eines automatischen Pulverschlauchwechsels - unterschiedliche Pulversorten und/oder Pulverarten der Pulverabgabeeinrichtung 50 wahlweise zuführbar.

Bei der Pulverabgabeeinrichtung 50 handelt es sich insbesondere um eine automatische Pulversprühvorrichtung zum Versprühen von Beschichtungspulver, wobei das Beschichtungspulver insbesondere in einem Druckluftstrom beispielsweise mit Hilfe einer Injektor-Pumpe oder mit Hilfe einer Dichtstrompumpe pneumatisch gefördert wird.

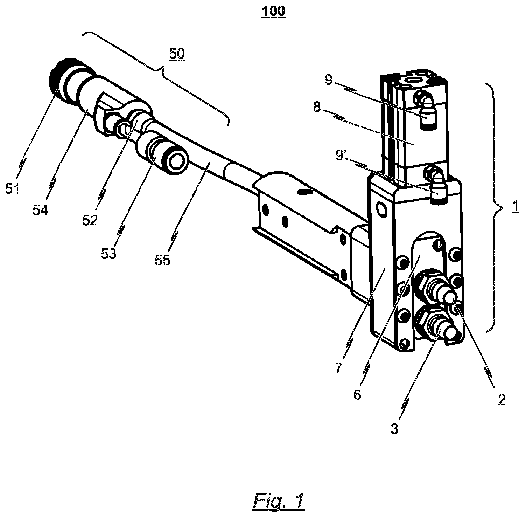

Bei der beispielsweise in FIG. 1 exemplarisch dargestellten Ausführungsform des erfindungsgemäßen Pulverabgabesystems 100 weist die hier als automatische Sprühbeschichtungspistole ausgeführte Pulverabgabeeinrichtung 50 ein Schaftgehäuse 54 auf, an dessen vorderen Endbereich ein Beschichtungspulver-Sprühkopf 51 befestigt oder befestigbar ist. Dieser Beschichtungspulver-Sprühkopf 51 bildet einen Beschichtungsmaterial-Abgabeauslass.

Am hinteren Endbereich des Schaftgehäuses 54 ist ein Druckgasanschluss 53 ausgebildet, welcher zum Anschluss von mindestens einer Druckgasleitung dient.

Des Weiteren ist am hinteren Endbereich des Schaftgehäuses 54 ein Beschichtungspulver-Anschluss 52 ausgebildet, welcher zum Anschluss von mindestens einer Beschichtungspulverleitung 55 dient.

Bei der in den Zeichnungen gezeigten exemplarischen Ausführungsform des erfindungsgemäßen Pulverabgabesystems 100 ist die Pulverleitung 55 als relativ starres Pulverrohr ausgeführt, in welchem ein Pulverkanal ausgebildet ist. Die als Pulverrohr ausgeführte Pulverleitung 55 dient bei dem in den Zeichnungen dargestellten Ausführungsbeispiel gleichzeitig als Träger zum Tragen des Beschichtungspulver-Sprühkopfes 51.

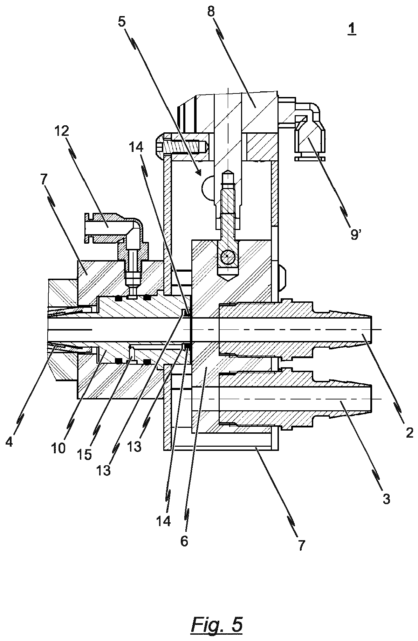

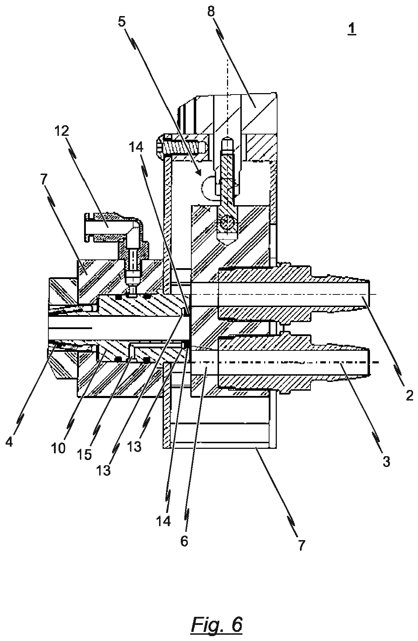

Um dem Beschichtungspulver-Sprühkopf 51 der Pulverabgabeeinrichtung 50 über die Pulverleitung 55 unterschiedliche Pulversorten bzw. Pulverarten zuführen zu können, ohne dass hierfür eine Reinigung der zu den entsprechenden Pulverreservoirs führenden Pulverschläuche notwendig ist, weist das erfindungsgemäße Pulverabgabesystem 100 eine Pulverweiche 1 auf. Der Aufbau und die Funktionsweise dieser Pulverweiche 1 werden nachfolgend insbesondere unter Bezugnahme auf die Darstellungen in den FIGS. 5 und 6 näher beschrieben.

Bei der exemplarischen Ausführungsform des erfindungsgemäßen Pulverabgabesystems 100 kommt insbesondere eine Pulverweiche 1 zum Einsatz, die einen ersten Pulvereinlass 2 und mindestens einen weiteren, zweiten Pulvereinlass (hier genau einen weiteren zweiten Pulvereinlass 3) aufweist. Der erste Pulvereinlass ist über eine in den Zeichnungen nicht dargestellte Pulverleitung, insbesondere in Gestalt eines Pulverschlauches, mit einem ersten Pulverreservoir strömungsmäßig verbunden oder verbindbar, während der zweite Pulvereinlass 3 über eine ebenfalls in den Zeichnungen nicht dargestellte zweite Pulverleitung, insbesondere Pulverschlauch, mit einem zweiten Pulverreservoir strömungsmäßig verbunden oder verbindbar ist.

Hierzu bietet es sich an, den ersten bzw. zweiten Pulvereinlass 2, 3 der Pulverweiche jeweils als Schlauchanschluss auszuführen, an welchem jeweils ein mit dem entsprechenden Pulverreservoir strömungsmäßig verbundener Pulverschlauch anschließbar ist.

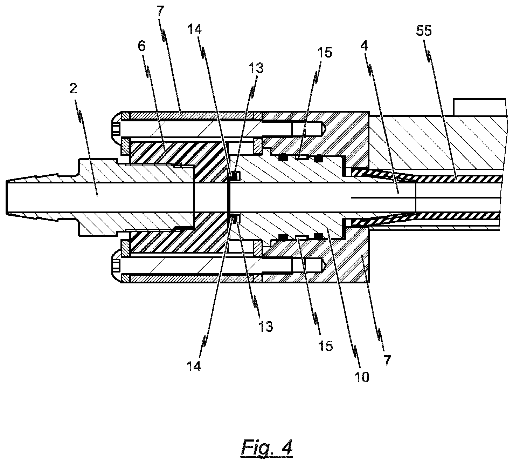

Die erfindungsgemäße Pulverweiche 1 weist ferner einen (einzigen) Pulverauslass 4 auf (vgl. beispielsweise FIG. 4). Dieser Pulverauslass 4 ist an seinem stromabwärtigen Endbereich strömungsmäßig mit der zu dem Beschichtungspulver-Sprühkopf 51 führenden Pulverleitung 55 strömungsmäßig verbunden. Der stromaufwärtige Endbereich des Pulverauslasses 4 hingegen ist wahlweise entweder mit dem ersten Pulvereinlass 2 oder dem zweiten Pulvereinlass 3 strömungsmäßig verbindbar, um auf diese Weise bei Bedarf die Pulverleitung 55 bzw. den Beschichtungspulver-Sprühkopf 51 der Pulverabgabeeinrichtung 50 strömungsmäßig mit einem ersten oder einem zweiten Pulverreservoir zu verbinden.

Um den Pulverauslass 4 der Pulverweiche 1 wahlweise strömungsmäßig mit dem ersten oder zweiten Pulvereinlass 2, 3 der Pulverweiche 1 verbinden zu können, ist ein Stellglied 5 vorgesehen (vgl. FIG. 5), mit welchem der erste und der zweite Pulvereinlass 2, 3 derart gekoppelt sind, dass diese relativ zu dem Pulverauslass 4 der Pulverweiche 1 bewegbar sind.

Im Einzelnen sind bei der exemplarischen Ausführungsform der erste und der zweite Pulvereinlass 2, 3 der Pulverweiche 1 derart mit dem Stellglied 5 gekoppelt, dass der erste und der zweite Pulvereinlass 2, 3 von einer ersten Position, in welcher nur der erste Pulvereinlass 2 mit dem Pulverauslass 4 strömungsmäßig verbunden ist, in eine zweite Position und umgekehrt überführbar sind, wobei in der zweiten Position nur der zweite Pulvereinlass 3 mit dem Pulverauslass 4 der Pulverweiche 1 strömungsmäßig verbunden ist. In FIG. 5 ist somit die Pulverweiche in einem Zustand gezeigt, in welchem der erste und der zweite Pulvereinlass 2, 3 der Pulverweiche 1 in der ersten Position vorliegen.

Insbesondere ist bei dem in den Zeichnungen dargestellten Ausführungsbeispiel vorgesehen, dass mit Hilfe des Stellglieds 5 der erste und zweite Pulvereinlass 2, 3 der Pulverweiche 1 gemeinsam relativ zu dem Pulverauslass 4 bewegbar sind. Zu diesem Zweck ist bei dem in den Zeichnungen dargestellten Ausführungsbeispiel vorgesehen, dass das Stellglied 5 eine insbesondere in einem Gehäuse 7 der Pulverweiche 1 geführte Schlittenanordnung 6 aufweist, in welcher der erste Pulvereinlass 2 und der zweite Pulvereinlass 3 der Pulverweiche 1 aufgenommen sind. Die Schlittenanordnung 6 ist dabei relativ zu dem Pulverauslass 4 der Pulverweiche 1 bewegbar.

Bei dem in den Zeichnungen dargestellten Ausführungsbeispiel ist die Schlittenanordnung 6 relativ zu dem Pulverauslass 4 der Pulverweiche 1 verschiebbar. In diesem Zusammenhang ist es allerdings auch denkbar, dass der erste und zweite Pulvereinlass 2, 3 der Pulverweiche 1 relativ zu dem Pulverauslass 4 der Pulverweiche 1 verschwenkbar sind.

Um eine Bewegung der Schlittenanordnung 6 zusammen mit dem ersten und zweiten Pulvereinlass 2, 3 relativ zu dem Pulverauslass 4 der Pulverweiche 1 realisieren zu können, weist das Stellglied 5 vorzugsweise einen Antrieb, insbesondere einen manuell, pneumatisch, elektrisch oder hydraulisch betätigten Antrieb auf, mit welchem die Schlittenanordnung 6 wirkverbunden ist.

Bei dem in den Zeichnungen dargestellten Ausführungsbeispiel ist der Antrieb 8 als pneumatisch betätigter Antrieb ausgeführt, welcher insbesondere mindestens einen Pneumatikzylinder aufweist. Dieser Pneumatikzylinder ist über entsprechende Druckanschlüsse 9, 9' mit Druckluft versorgbar, um ein Umschalten der Pulverweiche 1 zu realisieren. Selbstverständlich sind aber auch andere Antriebsarten, insbesondere Linearantriebe, zum Verschieben oder Verschwenken der Schlittenanordnung 6 denkbar.

Bei der erfindungsgemäßen Pulverweiche 1 ist vorgesehen, dass die Schlittenanordnung 6 relativ zu dem Pulverauslass 4 bewegbar ist, und zwar bei der in den Zeichnungen dargestellten exemplarischen Ausführungsform senkrecht zu einer von dem Pulverauslass 4 der Pulverweiche 1 festgelegten Pulverförderrichtung. Bei dem Ausführungsbeispiel gemäß den Zeichnungen entspricht die Pulverförderrichtung im Wesentlichen der Längsrichtung der Pulverleitung 55.

Gemäß einem Aspekt der vorliegenden Erfindung ist vorgesehen, dass die Pulverweiche 1 auch in einen Sperrmodus überführbar ist, in welchem weder der erste Pulvereinlass 2 noch der zweite Pulvereinlass 3 strömungsmäßig mit dem Pulverauslass 4 verbunden ist.

Der Sperrmodus der in den Zeichnungen gezeigten Pulverweiche 1 ist beispielhaft in FIG. 6 dargestellt. In diesem Sperrmodus sind mit Hilfe des Stellglieds 5 der erste und zweite Pulvereinlass 2, 3 in eine dritte Position überführt, in welcher weder der erste Pulvereinlass 2 noch der zweite Pulvereinlass 3 strömungsmäßig mit dem Pulverauslass 4 der Pulverweiche 1 verbunden sind.

Um eine möglichst reibungsfreie Bewegung der Schlittenanordnung 6 relativ zu dem Pulverauslass 4 der Pulverweiche 1 (beim Umschalten der der Pulverabgabeeinrichtung 50 zuzuführenden Pulverart bzw. Pulversorte) zu ermöglichen, ist gemäß einer Weiterbildung der vorliegenden Erfindung vorgesehen, dass der Pulverauslass 4 der Pulverweiche 1 relativ zu der Schlittenanordnung 6 bewegbar ist, und zwar vorzugsweise in Richtung einer von dem Pulverauslass 4 festgelegten Pulverförderrichtung, die bei dem in den Zeichnungen dargestellten Ausführungsbeispiel zumindest im Wesentlichen der Erstreckungsrichtung der Pulverleitung 55 entspricht.

Im Einzelnen, und wie es insbesondere den Darstellungen in den FIGS. 4, 5 und 6 entnommen werden kann, ist hierzu vorgesehen, dass der Pulvereinlass 4 der Pulverweiche 1 in einem Pulverauslassblock 10 ausgebildet ist, wobei dieser Pulverauslassblock 10 in dem Gehäuse 7 der Pulverweiche 1 aufgenommen ist, und zwar vorzugsweise derart, dass dieser relativ zu dem Gehäuse 7 in Pulverförderrichtung bewegbar ist.

Um diese Bewegung (ein Verfahren des Pulverauslassblockes 10 relativ zu dem Gehäuse 7 der Pulverweiche 1) möglichst automatisch realisieren zu können, ist es bevorzugt, wenn ein entsprechender Antrieb oder dergleichen Einrichtung (in den Zeichnungen nicht dargestellt) vorgesehen ist. Beispielsweise kann dieser Antrieb als pneumatisch betätigter Antrieb ausgebildet sein.

Zusätzlich oder alternativ hierzu ist erfindungsgemäß in dem Pulverauslassblock 10 eine Nut 13 ausgebildet, in welcher ein Dichtring 14, beispielsweise Elastomerring, eingesetzt ist. Wie es der Schnittdarstellung beispielsweise in FIG. 5 entnommen werden kann, steht die Nut 13 über ein Druckgaskanalsystem 15 mit einem Druckanschluss 12 in Fluidverbindung. Wenn über den Druckanschluss 12 das Druckgaskanalsystem 15 mit Druckluft beaufschlagt wird, wird der in die Nut 13 eingelegte Dichtring gegen die Schlittenanordnung 6 gedrückt, um so eine Abdichtung zu ermöglichen, was insbesondere dann von Vorteil ist, wenn der erste und zweite Pulvereinlass 2, 3 in ihrer ersten oder zweiten Position vorliegen.

Zum Verfahren bzw. Verschwenken der Schlittenanordnung 6 relativ zu dem Pulverauslassblock 10 wird das Druckgaskanalsystem 15 vorzugsweise entlüftet, so dass der Anpressdruck des Dichtringes 14 aufgehoben wird. Dies ermöglicht eine reibungsarme Bewegung der Schlittenanordnung 7 relativ zu dem Pulverauslassblock 10.

Obgleich in den Zeichnungen nicht dargestellt, ist es selbstverständlich auch denkbar, wenn die Pulverweiche 1 mit einer vorzugsweise lösbaren Arretierung versehen ist, um die Schlittenanordnung 7 in den jeweils mit Hilfe des Stellgliedes 5 eingestellten Positionen zu arretieren.

Die Erfindung ist nicht auf das in den Zeichnungen gezeigte Ausführungsbeispiel beschränkt, sondern bei dem Umfang der beigefügten Ansprüche definiert.

### Bezugszeichenliste

- 1: Pulverweiche
- 2: erster Pulvereinlass
- 3: zweiter Pulvereinlass
- 4: Pulverauslass
- 5: Stellglied
- 6: Schlittenanordnung
- 7: Gehäuse
- 8: Antrieb
- 9, 9': Druckanschluss
- 10: Pulverauslassblock
- 12: Druckanschluss
- 13: Nut
- 14: Dichtring
- 15: Druckgaskanalsystem
- 50: Pulverabgabeeinrichtung
- 51: Beschichtungspulver-Sprühkopf
- 52: Beschichtungspulver-Anschluss
- 53: Druckgasanschluss
- 54: Schaftgehäuse
- 55: Pulverleitung
- 100: Pulverabgabesystem

## Patentansprüche

1. Pulverweiche (1), insbesondere zum wahlweisen Zuführen von unterschiedlichen Pulversorten und/oder -arten zu einer Pulverabgabeeinrichtung (50), wobei die Pulverweiche (1) folgendes aufweist:
- einen ersten Pulvereinlass (2) und mindestens einen weiteren, zweiten Pulvereinlass (3); und
- einen Pulverauslass (4),
wobei wahlweise entweder der erste Pulvereinlass (2) oder der mindestens eine zweite Pulvereinlass (3) strömungsmäßig mit dem Pulverauslass (4) der Pulverweiche (1) verbindbar ist,
wobei ein Stellglied (5) vorgesehen ist, mit welchem der erste und der mindestens eine zweite Pulvereinlass (2, 3) derart gekoppelt sind, dass diese relativ zu dem Pulverauslass (4) der Pulverweiche (1) bewegbar sind, wobei das Stellglied (5) eine Schlittenanordnung (6) aufweist, in welcher der erste Pulvereinlass (2) und der mindestens eine zweite Pulvereinlass (3) aufgenommen sind, wobei die Schlittenanordnung (6) relativ zu dem Pulverauslass (4) bewegbar ist,
wobei der Pulverauslass (4) in einem Pulverauslassblock (10) ausgebildet ist, welcher in einem Gehäuse der Pulverweiche (1) aufgenommen ist, und wobei in dem Pulverauslassblock (10) mindestens eine in Richtung der Schlittenanordnung (6) zeigende Nut (13) ausgebildet ist, in welcher ein Dichtring (14) aufgenommen ist; und
wobei ferner ein vorzugsweise in dem Pulverauslassblock (10) zumindest teilweise integriertes Druckgaskanalsystem (15) vorgesehen ist, über welches die mindestens eine in Richtung der Schlittenanordnung (6) zeigende Nut (13) bedarfsweise mit Druckluft beaufschlagbar ist derart, dass der in der Nut (13) aufgenommene Dichtring (14) zum Zwecke einer Abdichtung gegen die Schlittenanordnung (6) gedrückt wird.

2. Pulverweiche (1) nach Anspruch 1,
wobei die Pulverweiche (1) wahlweise von einem Pulverzufuhrmodus, in welchem entweder der erste Pulvereinlass (2) oder der mindestens eine zweite Pulvereinlass (3) strömungsmäßig mit dem Pulverauslass (4) verbunden ist, in einen Sperrmodus und umgekehrt überführbar ist, wobei in dem Sperrmodus weder der erste Pulvereinlass (2) noch der mindestens eine zweite Pulvereinlass (3) strömungsmäßig mit dem Pulverauslass (4) verbunden ist.

3. Pulverweiche (1) nach Anspruch 1 oder 2,
wobei der erste und der mindestens eine zweite Pulvereinlass (2, 3) derart mit dem Stellglied (5) gekoppelt sind, dass der erste und der mindestens eine zweite Pulvereinlass (2, 3) von einer ersten Position, in welcher nur der erste Pulvereinlass (2) mit dem Pulverauslass (4) strömungsmäßig verbunden ist, in eine zweite Position und umgekehrt überführbar sind, wobei in der zweiten Position nur der mindestens eine zweite Pulvereinlass (3) mit dem Pulverauslass (4) strömungsmäßig verbunden ist.

4. Pulverweiche (1) nach Anspruch 3,
wobei der erste und der mindestens eine zweite Pulvereinlass (2, 3) derart mit dem Stellglied (5) gekoppelt sind, dass der erste und der mindestens eine zweite Pulvereinlass (2, 3) bedarfsweise in eine dritte Position überführbar sind, in welcher weder der erste Pulvereinlass (2) noch der mindestens eine zweite Pulvereinlass (3) strömungsmäßig mit dem Pulverauslass (4) verbunden ist.

5. Pulverweiche (1) nach einem der Ansprüche 1 bis 4,
wobei der erste und der mindestens eine zweite Pulvereinlass (2, 3) gemeinsam mit Hilfe des Stellgliedes (5) relativ zu dem Pulverauslass (4) bewegbar sind.

6. Pulverweiche (1) nach einem der Ansprüche 1 bis 5,
wobei das Stellglied (5) einen Antrieb (8), insbesondere einen manuell, pneumatisch, elektrisch oder hydraulisch betätigten Antrieb aufweist, mit welchem die Schlittenanordnung (6) wirkverbunden ist.

7. Pulverweiche (1) nach einem der Ansprüche 1 bis 6,
wobei der Pulverauslass (4) in einem Pulverauslassblock (10) ausgebildet ist, welcher in einem Gehäuse (7) der Pulverweiche (1) aufgenommen ist, und welcher relativ zu dem Gehäuse (7) in Pulverförderrichtung bewegbar ist.

8. Pulverweiche (1) nach Anspruch 7,
wobei ferner ein Antrieb, insbesondere pneumatisch betätigter Antrieb, vorgesehen ist, zum Bewegen des Pulverauslassblockes relativ zu dem Stellglied (5) bzw. dem Gehäuse (7) der Pulverweiche (1).

9. Pulverweiche (1) nach Anspruch 8,
wobei der Antrieb ausgebildet ist, den Pulverauslassblock (10) von einer ersten Position, in welcher der Pulverauslassblock (10) von dem Stellglied (5) beabstandet ist, in eine zweite Position oder umgekehrt zu überführen, wobei in der zweiten Position des Pulverauslassblockes (10) dieser an dem Stellglied (5) anstößt.

10. Pulverweiche (1) nach einem der Ansprüche 1 bis 9,
wobei der erste und/oder mindestens eine zweite Pulvereinlass (2, 3) als Schlauchanschluss aufgeführt sind/ist, an welchem ein Pulverschlauch oder dergleichen Pulverleitung anschließbar ist zum Zuführen von Pulver zu der Pulverweiche (1).

11. Pulverweiche (1) nach einem der Ansprüche 1 bis 10,
wobei der Pulverauslass (4) der Pulverweiche (1) mit einer Pulverleitung (55), insbesondere Pulverschlauch oder Pulverrohr, strömungsmäßig verbunden oder verbindbar ist zum Zuführen von Beschichtungspulver zu einer Pulverabgabeeinrichtung (50) und/oder zu einem Beschichtungspulver-Sprühkopf (51) einer Pulverabgabeeinrichtung (50).

12. Pulverweiche (1) nach einem der Ansprüche 1 bis 11,
wobei die Schlittenanordnung (6) relativ zu dem Pulverauslass (4) verschiebbar oder verschwenkbar ist.

13. Pulverweiche (1) nach einem der Ansprüche 1 bis 12,
wobei die Schlittenanordnung (6) relativ zu dem Pulverauslass (4) senkrecht zu einer von dem Pulverauslass (4) festgelegten Pulverförderrichtung bewegbar ist.

14. Pulverweiche (1) nach Anspruch 13,
wobei der Pulverauslass (4) relativ zu der Schlittenanordnung (6) in einer von dem Pulverauslass (4) festgelegten Pulverförderrichtung bewegbar ist.

15. Pulverabgabesystem mit einer Pulverweiche (1) gemäß einem der Ansprüche 1 bis 14 und einer Pulverabgabeeinrichtung (50), insbesondere in Gestalt einer automatischen Pulversprühpistole, wobei der Pulverauslass (4) der Pulverweiche (1) strömungsmäßig mit einem Beschichtungspulver-Sprühkopf (51) der Pulverabgabeeinrichtung (50) verbunden ist.

## Claims

1. A powder switch (1), particularly for selectively supplying different types and/or kinds of powders to a powder dispensing device (50), wherein the powder switch (1) comprises the following:
- a first powder inlet (2) and at least one further second powder inlet (3); and
- a powder outlet (4),
wherein either the first powder inlet (2) or the at least one second powder inlet (3) is selectively fluidly connectable to the powder outlet (4) of the powder switch (1),
wherein an actuating element (5) is provided to which the first and the at least one second powder inlet (2, 3) are coupled in such a manner as to be movable relative to the powder outlet (4) of the powder switch (1),
wherein the actuating element (5) comprises a carriage assembly (6) in which the first powder inlet (2) and the at least one second powder inlet (3) are accommodated, wherein the carriage assembly (6) is movable relative to the powder outlet (4),
wherein the powder outlet (4) is configured in a powder outlet block (10) which is accommodated in a housing of the powder switch (1), and wherein at least one groove (13) facing toward the carriage assembly (6) in which a sealing ring (14) is accommodated is configured in the powder outlet block (10); and
wherein a compressed gas channel system (15) preferably at least partially integrated into the powder outlet block (10) is further provided, by means of which the at least one groove (13) facing the carriage assembly (6) can be pressurized as needed by the compressed air such that the sealing ring (14) accommodated in the groove (13) is pressed against the carriage assembly (6) for the purpose of sealing.

2. The powder switch (1) according to claim 1,
wherein the powder switch (1) can be alternatingly conveyed from a powder supply mode, in which either the first powder inlet (2) or the at least one second powder inlet (3) is fluidly connected to the powder outlet (4), into a blocking mode and vice versa, wherein in the blocking mode, neither the first powder inlet (2) nor the at least one second powder inlet (3) is fluidly connected to the powder outlet (4).

3. The powder switch (1) according to claim 1 or 2,
wherein the first and the at least one second powder inlet (2, 3) are coupled to the actuating element (5) such that the first and the at least one second powder inlet (2, 3) can be conveyed from a first position, in which only the first powder inlet (2) is fluidly connected to the powder outlet (4), into a second position and vice versa, wherein in the second position, only the at least one second powder inlet (3) is fluidly connected to the powder outlet (4).

4. The powder switch (1) according to claim 3,
wherein the first and the at least one second powder inlet (2, 3) are coupled to the actuating element (5) such that the first and the at least one second powder inlet (2, 3) can be conveyed as needed into a third position in which neither the first powder inlet (2) nor the at least one second powder inlet (3) is fluidly connected to the powder outlet (4).

5. The powder switch (1) according to one of claims 1 to 4,
wherein the first and the at least one second powder inlet (2, 3) can move together relative to the powder outlet (4) by means of the actuating element (5).

6. The powder switch (1) according to one of claims 1 to 5,
wherein the actuating element (5) comprises a drive (8), in particular a manually, pneumatically, electrically or hydraulically operated drive, to which the carriage assembly (6) is operatively connected.

7. The powder switch (1) according to one of claims 1 to 6,
wherein the powder outlet (4) is configured in a powder outlet block (10) which is accommodated in a housing (7) of the powder switch (1) and which is movable relative to the housing (7) in a powder-conveying direction.

8. The powder switch (1) according to claim 7,
wherein a drive, in particular a pneumatically operated drive, is further provided for moving the powder outlet block relative to the actuating element (5) or the housing (7) of the powder switch (1) respectively.

9. The powder switch (1) according to claim 8,
wherein the drive is designed to convey the powder outlet block (10) from a first position, in which the powder outlet block (10) is distanced from the actuating element (5), into a second position or vice versa, wherein in the second position of the powder outlet block (10), same abuts against the actuating element (5).

10. The powder switch (1) according to one of claims 1 to 9,
wherein the first and/or the at least one second powder inlet (2, 3) is implemented as a hose connection to which a powder hose or similar powder line can be connected for supplying powder to the powder switch (1).

11. The powder switch (1) according to one of claims 1 to 10,
wherein the powder outlet (4) of the powder switch (1) is fluidly connected or connectable to a powder line (55), in particular a powder hose or powder tube, to feed coating powder to a powder dispensing device (50) and/or to a coating powder spray head (51) of a powder dispensing device (50).

12. The powder switch (1) according to one of claims 1 to 11,
wherein the carriage assembly (6) is displaceable or pivotable relative to the powder outlet (4).

13. The powder switch (1) according to one of claims 1 to 12,
wherein the carriage assembly (6) is movable relative to the powder outlet (4) perpendicular to a powder-conveying direction defined by the powder outlet (4).

14. The powder switch (1) according to claims 13,
wherein the powder outlet (4) is movable relative to the carriage assembly (6) in a powder-conveying direction defined by the powder outlet (4).

15. A powder dispensing system having a powder switch (1) according to one of claims 1 to 14 and a powder dispensing device (50), particularly in the form of an automatic powder spray gun, wherein the powder outlet (4) of the powder switch (1) is fluidly connected to a coating powder spray head (51) of the powder dispensing device (50).

## Revendications

1. Dispositif formant aiguillage pour poudre (1), en particulier pour l'alimentation sélective de différentes sortes et/ou différents types de poudre vers un dispositif distributeur de poudre (50), le dispositif formant aiguillage pour poudre (1) comprenant
- une première entrée de poudre (2) et au moins une autre, seconde entrée de poudre (3) ; et
- une sortie de poudre (4),
dans lequel sélectivement soit la première entrée de poudre (2) soit ladite au moins une seconde entrée de poudre (3) est susceptible d'être reliée en termes d'écoulement à la sortie de poudre (4) du dispositif formant aiguillage pour poudre (1),
il est prévu un organe de réglage (5) auquel la première et ladite au moins une seconde entrée de poudre (2, 3) sont couplées de manière à être mobiles par rapport à la sortie de poudre (4) du dispositif formant aiguillage pour poudre (1),
l'organe de réglage (5) comprend un ensemble à chariot (6) dans lequel sont logées la première entrée de poudre (2) et ladite au moins une seconde entrée de poudre (3),
l'ensemble à chariot (6) est mobile par rapport à la sortie de poudre (4),
la sortie de poudre (4) est réalisée dans un bloc de sortie de poudre (10) qui est logé dans un boîtier du dispositif formant aiguillage pour poudre (1), et
au moins une gorge (13) dirigée en direction de l'ensemble à chariot (6) est ménagée dans ledit bloc de sortie de poudre (10), gorge dans laquelle est logée une bague d'étanchéité (14) ; et
de plus, il est prévu un système de canal à gaz sous pression (15) qui est de préférence intégré au moins partiellement dans le bloc de sortie de poudre (10) et par lequel ladite au moins une gorge (13) dirigée en direction de l'ensemble à chariot (6) est susceptible d'être sollicitée en cas de besoin par de l'air comprimé, de telle sorte que la bague d'étanchéité (14) logée dans la gorge (13) est pressée contre l'ensemble à chariot (6) pour assurer un étanchement.

2. Dispositif formant aiguillage pour poudre (1) selon la revendication 1, dans lequel
le dispositif formant aiguillage pour poudre (1) est sélectivement transférable d'un mode d'alimentation en poudre dans lequel soit la première entrée de poudre (2) soit ladite au moins une seconde entrée de poudre (3) est reliée en termes d'écoulement à la sortie de poudre (4), jusque dans un mode de blocage et inversement,
dans le mode de blocage, ni la première entrée de poudre (2) ni ladite au moins une seconde entrée de poudre (3) n'est reliée en termes d'écoulement à la sortie de poudre (4).

3. Dispositif formant aiguillage pour poudre (1) selon la revendication 1 ou 2,
dans lequel
la première et ladite au moins une seconde entrée de poudre (2, 3) sont couplées à l'organe de réglage (5) de telle sorte que la première et ladite au moins une seconde entrée de poudre (2, 3) sont transférables depuis une première position dans laquelle seule la première entrée de poudre (2) est reliée en termes d'écoulement à la sortie de poudre (4), jusque dans une seconde position et inversement,
dans la seconde position, seule ladite au moins une seconde entrée de poudre (3) est reliée en termes d'écoulement à la sortie de poudre (4).

4. Dispositif formant aiguillage pour poudre (1) selon la revendication 3, dans lequel
la première et ladite au moins une seconde entrée de poudre (2, 3) sont couplées à l'organe de réglage (5) de telle sorte que la première et ladite au moins une seconde entrée de poudre (2, 3) sont transférables en cas de besoin jusque dans une troisième position dans laquelle ni la première entrée de poudre (2) ni ladite au moins une seconde entrée de poudre (3) n'est reliée en termes d'écoulement à la sortie de poudre (4).

5. Dispositif formant aiguillage pour poudre (1) selon l'une des revendications 1 à 4,
dans lequel
la première et ladite au moins une seconde entrée de poudre (2, 3) sont mobiles conjointement par rapport à la sortie de poudre (4) à l'aide de l'organe de réglage (5).

6. Dispositif formant aiguillage pour poudre (1) selon l'une des revendications 1 à 5,
dans lequel
l'organe de réglage (5) comprend un entraînement (8), en particulier un entraînement actionné par voie manuelle, pneumatique, électrique ou hydraulique, auquel est relié en actionnement l'ensemble à chariot (6).

7. Dispositif formant aiguillage pour poudre (1) selon l'une des revendications 1 à 6,
dans lequel
la sortie de poudre (4) est réalisée dans un bloc de sortie de poudre (10) qui est reçu dans un boîtier (7) du dispositif formant aiguillage pour poudre (1) et qui est mobile en direction de convoyage de poudre par rapport au boîtier (7).

8. Dispositif formant aiguillage pour poudre (1) selon la revendication 7, dans lequel
il est prévu en outre un entraînement, en particulier un entraînement actionné par voie pneumatique, pour déplacer le bloc de sortie de poudre par rapport à l'organe de réglage (5) ou par rapport au boîtier (7) du dispositif formant aiguillage pour poudre (1).

9. Dispositif formant aiguillage pour poudre (1) selon la revendication 8, dans lequel
l'entraînement est réalisé pour transférer le bloc de sortie de poudre (10) depuis une première position dans laquelle le bloc de sortie de poudre (10) est espacé de l'organe de réglage (5), jusque dans une seconde position ou inversement, le bloc de sortie de poudre (10) venant buter contre l'organe de réglage (5), dans sa seconde position.

10. Dispositif formant aiguillage pour poudre (1) selon l'une des revendications 1 à 9,
dans lequel
la première et/ou ladite au moins une seconde entrée de poudre (2, 3) est/sont réalisée(s) sous forme de raccord de tuyau auquel peut être raccordé un tuyau à poudre ou un conduit à poudre similaire pour amener de la poudre au dispositif formant aiguillage pour poudre (1).

11. Dispositif formant aiguillage pour poudre (1) selon l'une des revendications 1 à 10,
dans lequel
la sortie de poudre (4) du dispositif formant aiguillage pour poudre (1) est reliée ou susceptible d'être reliée en termes d'écoulement à un conduit à poudre (55), en particulier à un tuyau à poudre ou à un tube à poudre, pour amener de la poudre de revêtement jusqu'à un dispositif distributeur de poudre (50) et/ou jusqu'à une tête de pulvérisation de poudre de revêtement (51) d'un dispositif distributeur de poudre (50).

12. Dispositif formant aiguillage pour poudre (1) selon l'une des revendications 1 à 11,
dans lequel
l'ensemble à chariot (6) est mobile en translation ou en pivotement par rapport à la sortie de poudre (4).

13. Dispositif formant aiguillage pour poudre (1) selon l'une des revendications 1 à 12,
dans lequel
l'ensemble à chariot (6) est mobile par rapport à la sortie de poudre (4) perpendiculairement à une direction de convoyage de poudre définie par la sortie de poudre (4).

14. Dispositif formant aiguillage pour poudre (1) selon la revendication 13, dans lequel
la sortie de poudre (4) est mobile par rapport à l'ensemble à chariot (6) dans une direction de convoyage de poudre définie par la sortie de poudre (4).

15. Système de distribution de poudre comportant un dispositif formant aiguillage pour poudre (1) selon l'une des revendications 1 à 14 et un dispositif distributeur de poudre (50), en particulier sous la forme d'un pistolet de pulvérisation de poudre automatique,
dans lequel
la sortie de poudre (4) du dispositif formant aiguillage pour poudre (1) est reliée en termes d'écoulement à une tête de pulvérisation de poudre de revêtement (51) du dispositif distributeur de poudre (50).
